(19)

Europäisches
Patentamt
European
Patent Office
Office européen
des brevets

(11) **EP 2 022 584 B1**

(12) **EUROPEAN PATENT SPECIFICATION**

(45) Date of publication and mention
of the grant of the patent:
**25.01.2012 Bulletin 2012/04**

(21) Application number: **07744701.9**

(22) Date of filing: **05.06.2007**

(51) Int Cl.:
***B23C 5/06*** *(2006.01)* ***B23C 5/20*** *(2006.01)*

(86) International application number:
**PCT/JP2007/061345**

(87) International publication number:
**WO 2007/142224 (13.12.2007 Gazette 2007/50)**

(54) **CUTTING TOOL AND CUTTING INSERT**

SCHNEIDWERKZEUG UND SCHNEIDEINSATZ

OUTIL DE COUPE ET INSERT DE COUPE

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **06.06.2006 JP 2006157050**

(43) Date of publication of application:
**11.02.2009 Bulletin 2009/07**

(73) Proprietor: **Mitsubishi Materials Corporation
Tokyo 100-8117 (JP)**

(72) Inventors:
• **TAKAHASHI, Hidebumi
Joso-shi, Ibaraki 300-2795 (JP)**

• **NARITA, Touru
Joso-shi, Ibaraki 300-2795 (JP)**

(74) Representative: **HOFFMANN EITLE
Patent- und Rechtsanwälte
Arabellastraße 4
81925 München (DE)**

(56) References cited:
**GB-A- 2 298 600          JP-A- 8 057 709
JP-A- 08 057 709          JP-A- 09 155 624
JP-A- 2002 263 943          JP-A- 2002 263 943
JP-A- 2005 238 368          US-A- 6 079 912**

**Description**

TECHNICAL FIELD

The present invention relates to a cutting tool used when surface machining is applied to a workpiece, and a cutting insert that can be mounted removably on the cutting tool.

BACKGROUND ART

Heretofore, a cutting tool according to the preamble of claim 1, used when cutting is applied to a workpiece, is known for example as described in Japanese Patent Publication No. 3180604 B2.

The cutting tool disclosed in Japanese Patent Publication No. 3180604 B2 is rotated at high speed about the shaft of the tool body, is fed in a direction at right angles to the axial direction of the tool body, and cuts the surface of a workpiece by main cutting edges of the cutting inserts, which are mounted to the outer periphery at the tip of the tool body, and directed toward the tip (forward in the cutting direction) of the tool body and in the radial-outer direction.

For such a cutting tool, a cutting insert is widely used whose external shape is a planar polygon with a cutting edge formed on each of the sides of the polygonal surface (for example, refer to Japanese Patent Publication No. 3180604B2). Such a cutting insert is directed forward in the tool rotation direction with the polygonal surface being the cutting face, and performs cutting by the cutting edge directed toward the radial-outside of the tool body. For the cutting insert as described above, a positive type cutting insert, in which a relief angle is provided on a side face (flank) continuous with the cutting edge, and a negative type cutting insert, in which no relief angle is provided on the side face, are produced. For example, in heavy cutting wherein the feed rate and cutting depth are high, since there is a tendency for the cutting resistance to be high, the negative type cutting insert, which has high stiffness and gives little concern of defects, is used.

In the negative type cutting insert, cutting edges are formed on each of the sides of two polygonal surfaces. The side faces are located such that they are approximately at right angles to the polygonal surfaces, and have an approximately planar rectangular external shape. It is possible to increase the life of such a cutting insert by using the cutting edges formed on each of the sides of the two polygonal surfaces in sequence, so that the cost of using the cutting insert can be reduced significantly.

In order to further increase the life of the cutting insert, it is effective to increase the number of cutting edges. For example, a planar octagonal cutting insert is proposed in which eight cutting edges are formed on each of two octagonal surfaces, to provide sixteen cutting edges. However, in the planar octagonal shape as above, since the angle formed by adjacent cutting edges is 135°, which is large, then in the case where the corner angle (angle formed with the axis) of the main cutting edge directed toward the tip (forward in the cutting direction) of the tool body and in the radial-outer direction is set for example to 45° or greater, there is concern that the side face adjacent to the side face where the main cutting edge is formed and toward the rear (backward in the cutting direction) of the tool body, interferes with the workpiece. On the other hand, if the corner angle is set to less than 45° in order to relieve the side face from the workpiece, the side face adjacent to the side face where the main cutting edge is formed and forward in the cutting direction, interferes with the workpiece.

Furthermore, in the case where the number of cutting edges (number of sides) is increased in this manner, if the size of the cutting insert is fixed, the length of each of the cutting edges is shortened, and hence the amount of cut is reduced, which makes it unable to perform cutting efficiently.

Therefore, Japanese Unexamined Patent Application, First Publication No. 2002-263943 proposes a planar heptagonal cutting insert. FIG. 9 shows a cutting tool on which a planar heptagonal cutting insert with a corner angle $\alpha$ set to $\alpha = 45°$ is mounted, cutting a workpiece W.

In this cutting insert 1, even in the case where the corner angle [alpha] of the main cutting edge 2A is set to $\alpha = 45°$, a cutting edge 2B (side face) directed forward in the cutting direction has a relief receding backward in the cutting direction as it approaches the radial-inside of the tool body, and a cutting edge 2C (side face) directed toward the radial-outside of the tool body has a relief that recedes toward the radial-inside of the tool body as it proceeds backward in the cutting direction. As a result, the side faces do not interfere with the workpiece W, which prevents the cutting edges 2B and 2C projected onto the side faces from being worn away before they are used for cutting, so that the seven cutting edges 2 formed on the heptagonal face can be used in sequence. Moreover, it is possible to use the front face and the back face reversibly, so that fourteen cutting edges 2 can be used in total.

SUMMARY OF INVENTION

[Problems that the Invention is to Solve]

For such a cutting insert 1, in order to finish a machined surface cut by a main cutting edge 2A smoothly, a sub-cutting edge 3 is sometimes formed, which is continuous with the cutting edge 2 at a predetermined angle. For example, in a cutting tool that cuts the surface of a workpiece W, a sub-cutting edge 3, which is continuous with the main cutting edge 2A at a predetermined angle and that is directed forward in the cutting direction and in the radial-outer direction, is positioned such that it crosses approximately at right angles with respect to the axis of the tool body, so it is possible to finish the surface cut by the main cutting edge 2A smoothly using the sub-cutting edge 3.

In the case where such sub-cutting edges 3 are provided on the cutting insert 1 which is heptagonal and can be used with front/back reversed, the sub-cutting edge 3 of one heptagonal surface and the sub-cutting edge 3 of another heptagonal surface are provided in one corner 4. As a result, a pair of flat parts which incline inward from a pair of side faces connected at the corner 4, is formed in the corner 4, and sub-cutting edges 3 are formed at the ridge line between the flat parts and the heptagonal surfaces. That is, a pair of flat parts connected at a greater angle than that of the pair of side faces is arranged in the corner 4.

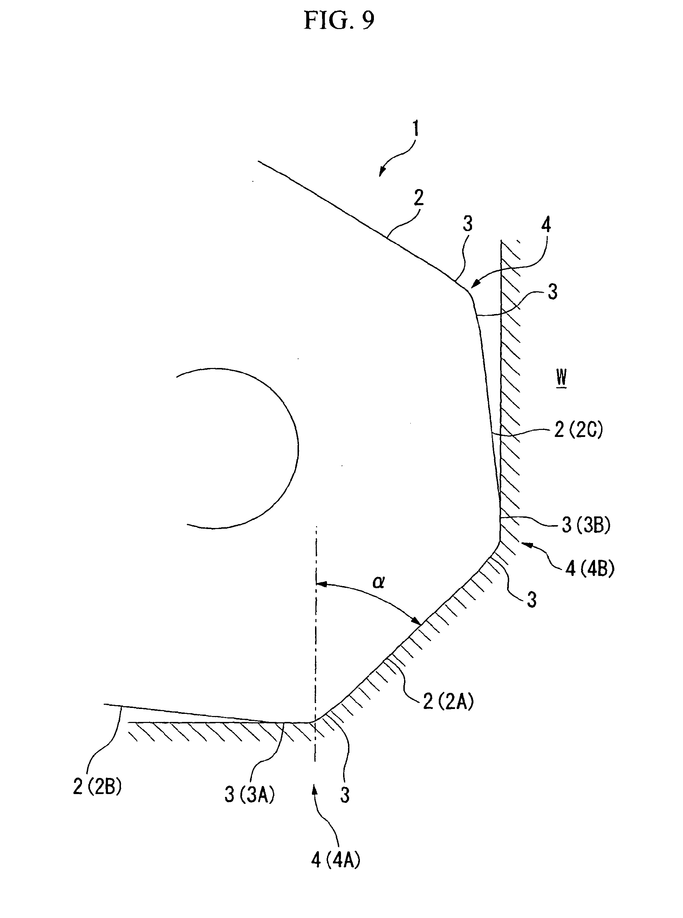

However, if the cutting insert 1 as described above is located such that one sub-cutting edge 3A formed at a corner 4A of one heptagonal face protruding toward the radial-outside of the tool body and forward in the cutting direction crosses approximately at right angles to the axis, then as shown in FIG. 9, in the case where a vertical wall is formed on the surface of a workpiece W in the feeding direction of the tool body, one of a pair of flat parts formed at the corner 4B adjacent to the corner 4A on the rear end side of the tool body interferes with the wall, so that there is concern about the cutting resistance increasing. That is, in spite of reducing the angle formed by the adjacent cutting edges 2 by forming the planar heptagonal shape, since the connecting angle between a pair of flat parts provided to form a sub-cutting edge 3 is large, similarly to the planar octagonal shape cutting insert, it interferes with the workpiece W.

As a result, in such a case, abnormal vibration (chatter) caused by the increase in the cutting resistance occurs. Therefore, there is a problem in that it is difficult to finish the surface of the workpiece W to a satisfactory state.

[Means of Solving the Problems]

This invention has been made in consideration of the above circumstances, with an object of providing; a cutting tool in which even with a negative type planar heptagonal cutting insert of which both sides can be used, wherein sub-cutting edges are provided at the corners, it is possible to use cutting edges formed on each of the sides of the heptagonal faces and the sub-cutting edges formed at its corners in sequence, and also to perform stable cutting consistently, and a cutting insert mounted removably on the cutting tool.

The cutting insert of the present invention is a cutting insert that is mounted removably on a cutting tool and has a front/back-reversal symmetric substantially regular heptagonal planar shape having two heptagonal faces parallel with each other, a side face continuous with the heptagonal faces at right angles, and a cutting edge provided on each ridge line between the heptagonal face and the side face, wherein the cutting edge includes a main cutting edge projected onto each side of the regular heptagon; and a sub-cutting edge that extends from opposite ends of each main cutting edge such that it inclines from the main cutting edge toward the center of the heptagonal face, when viewed from the side facing the heptagonal face, and connects adjacent main cutting edges, and the angle formed by two adjacent sub-cutting edges (31a, 31b) is larger than or equal to 131.43° and less than or equal to 139.34°.

The cutting tool of an embodiment of the present invention is provided with a tool body which rotates about its axis, and a cutting insert mounted removably on the outer periphery at the tip of the tool body, wherein the cutting insert has a front/back-reversal symmetric substantially regular heptagonal planar shape having two heptagonal faces parallel with each other, a side face continuous with each of the heptagonal faces at right angles, and a cutting edge provided on each ridge line between the heptagonal face and the side face, the cutting edge includes a main cutting edge projected onto the side of the regular heptagon, and sub-cutting edges that extend from opposite ends of each main cutting edge such that they incline from the main cutting edges toward the center of the heptagonal face, when viewed from the side facing the heptagonal face, and connect adjacent main cutting edges, and the angle formed by two adjacent sub-cutting edges is larger than or equal to 131.43° and less than or equal to 139.34°, and the tool body is equipped with a mounting seat that retains the cutting insert such that one main cutting edge is directed toward a tip side of the tool body and in a radial-outer direction in order to make it to work in cutting, and a corner angle $\alpha$ between the main cutting edge and the axis satisfies a relation $40° <= \alpha <= 44°$.

According to the cutting tool and cutting insert with this construction, by setting the corner angle $\alpha$ formed by the main cutting edge that participates in cutting and the axis of the tool body to $\alpha <= 44°$, it is possible to ensure a relief which recedes toward the radial-inside of the tool body as it approaches the rear end (backward in the cutting direction) of the tool body, on the sub-cutting edge provided at the corner and directed toward the radial-outside of the tool body. Therefore it is possible to prevent interference between the sub-cutting edge and the workpiece. Moreover, since the corner angle $\alpha$ is set to $\alpha \geq 40°$, it is possible to ensure a relief which recedes gradually backward in the cutting direction as it approaches the radial-inside of the tool body, on the main cutting edge (flank) directed toward the tip side (forward in the cutting direction) of the tool body. As a result, it is possible to prevent interference between the main cutting edge (flank) and the workpiece.

Accordingly, it is possible to use the main cutting edges and the sub-cutting edges formed on each of the heptagonal faces in sequence, so that it is possible to increase the life of the cutting insert, which can reduce the usage cost significantly.

Furthermore, since it is possible to locate the sub-cutting edge facing the finished surface (forward in the cutting direction) which is continuous from the main cutting edge (that works in cutting) having a corner angle α toward the front in the cutting direction, such that it crosses the axis approximately at right angles, the machined surface (finished surface) can be finished smoothly.

Moreover, the arrangement may be such that the side face contains flanks continuous with each of the cutting edges, and in the tool body the mounting seat is provided with: a first contact face which makes contact with the flank continuous with the main cutting edge next but one from the main cutting edge that participates in cutting, at a rear end side (backward in the cutting direction) of the tool body; a second contact face which makes contact with the flank next but one from the flank which makes contact with the first contact face toward a radial-inside of the tool body; and a flank that is provided between the first contact face and the second contact face, and with which the cutting insert does not make contact. As a result the first contact face protrudes gradually toward the tip side (forward in the cutting direction) of the tool body as it approaches the radial-outside of the tool body. Therefore it is possible to prevent the cutting insert from moving radially outward due to centrifugal force when the tool body is rotated at high speed about the axis.

Furthermore, it is possible to withstand the thrust force of the cutting resistance in the first contact face, and also to withstand the feeding force of the cutting resistance in the second contact face. Therefore it is possible to reliably prevent the cutting insert from moving due to the cutting resistance. Moreover, by providing a flank between the first contact face and the second contact face, the cutting insert is located reliably with respect to the tool body by the first contact face and the second contact face. As a result, misalignment and oscillation of the cutting insert can be prevented, and it is possible to perform cutting with good dimensional accuracy, and also to prevent damage to the cutting insert.

Furthermore, the cutting tool may be constructed such that: a radius r of an inscribed circle of the heptagonal face of the cutting insert; a maximum radius R1 of a rotation path formed around the axis by the cutting insert mounted on the mounting seat; and a maximum radius R2 of a rotation path formed around the axis by the tool body satisfy

$$2 \times r \times (0.05) < R1 - R2 < 2 \times r \times (0.15).$$

According to the cutting tool with this construction, since the cutting insert protrudes toward the radial-outside of the tool body when mounted on the mounting seat, the workpiece and the tool body do not interfere, enabling cutting with a great depth of cut.

Moreover each heptagonal face of the cutting insert may have: a planar clamping face provided at right angles to the side face, and parallel with each other; a cutting face indented from the clamping face; and a breaker provided on the cutting face, continuous with the cutting edge and indented from the cutting face. In this manner, it is possible to fragment chips produced by the main cutting edge, improving chip processing, so that it is possible to perform excellent cutting. Furthermore, even if the axial rake angle and the radial rake angle are set to negative with one heptagonal face as the reference, since the breaker is formed such that it is continuous with the cutting edge, the orthogonal rake of the main cutting edge can be set to positive, improving the cutting quality, so the cutting resistance can be reduced.

Moreover, in the case where no breaker is required, such as in the case of cutting a soft material, the heptagonal face may have: a planar clamping face provided at right angles to the side face and parallel with each other; and a planar cutting face indented from the clamping face; so that no breaker needs to be provided. In this case, since the shape is simple, it is easy to produce the cutting insert.

Furthermore, the arrangement may be such that when the cutting insert is viewed from a side facing the flanks, the cutting edges are provided so as to give an indented concave curve. In this manner, even if the axial rake angle and the radial rake angle are set to be negative as described previously, the cutting edge incline angle of the main cutting edge can be set to be positive, improving the ejection of chips, so that excellent cutting can be performed.

[Effect of the Invention]

According to an embodiment of the present invention, it is possible to provide; a cutting tool that can use in sequence main cutting edges and sub-cutting edges formed on each of the sides of the heptagonal faces and also perform stable cutting consistently, even with a negative type approximately heptagonal planar cutting insert where both sides can be used and wherein sub-cutting edges are provided at the corners, and a cutting insert mounted removably on the cutting tool.

## BRIEF DESCRIPTION OF THE DRAWINGS

To enable a better understanding of the present invention, and to show how the same may be carried out into effect, reference will now be made, by way of example only, to the accompanying drawings, in which:-

FIG. 1 is a partially sectioned side view of a cutting tool, being an embodiment of the present invention;
FIG. 2 is a side view of the cutting tool shown in FIG. 1;
FIG. 3 is a tip end view of the cutting tool shown in FIG. 1;
FIG. 4 is a front view of a cutting insert which is mounted on the cutting tool shown in FIG. 1;
FIG. 5 is a side view of the cutting insert shown in FIG. 4;
FIG. 6 is a cross-sectional diagram along the line X-X in FIG 4;
FIG. 7 is an enlarged diagram of the corner of the cutting insert shown in FIG. 4;
FIG. 8 is an enlarged diagram of the vicinity of the cutting insert when cutting is performed by the cutting tool shown in FIG. 1; and
FIG. 9 is an enlarged diagram of the vicinity of the cutting insert when cutting is performed by a conventional cutting tool.

[Description of the Reference Symbols]

10 : Milling cutter (Cutting tool)
11 : Tool body
13 : Mounting seat
14 : First contact face
16 : Second contact face
20 : Cutting insert
21 : Heptagonal surface
22 : Side face
23 : Cutting edge
23a : Main cutting edge
24 : Concave curve part
25 : Inclined part
26 : Corner
27 : Breaker
31 a, : 31 b Sub-cutting edge

## DETAILED DESCRIPTION

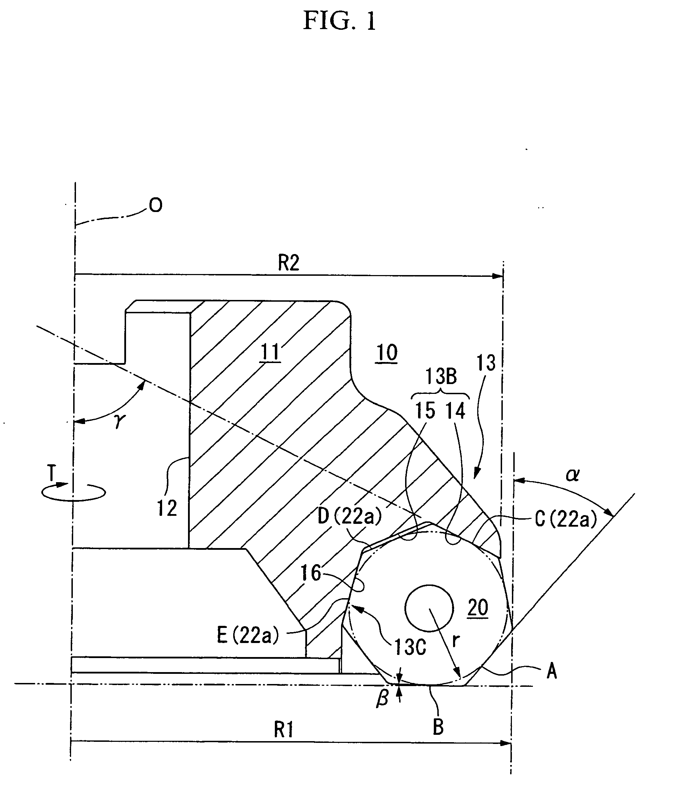

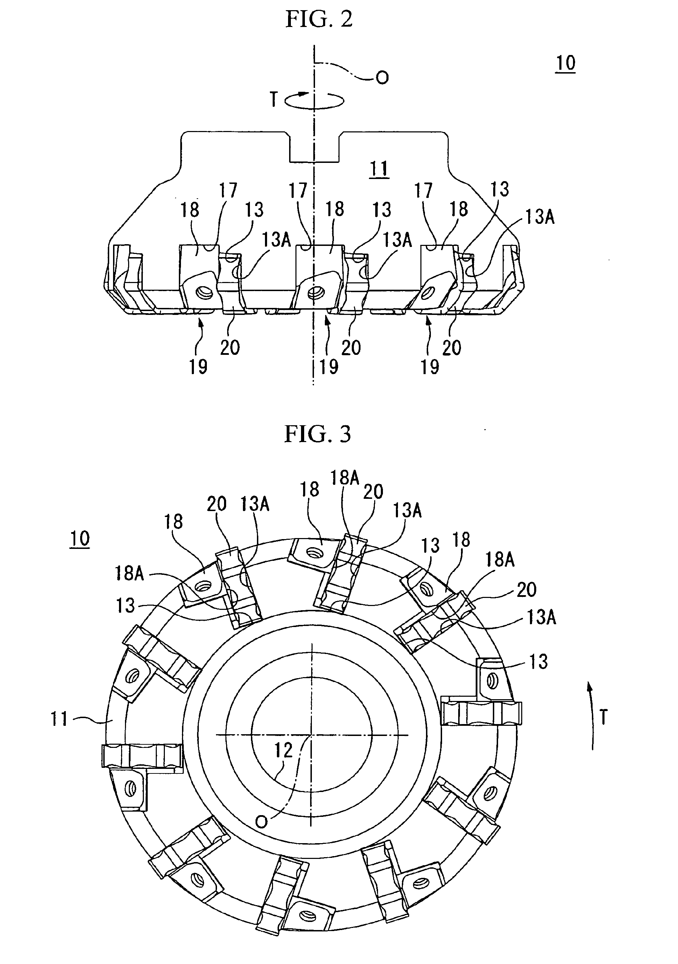

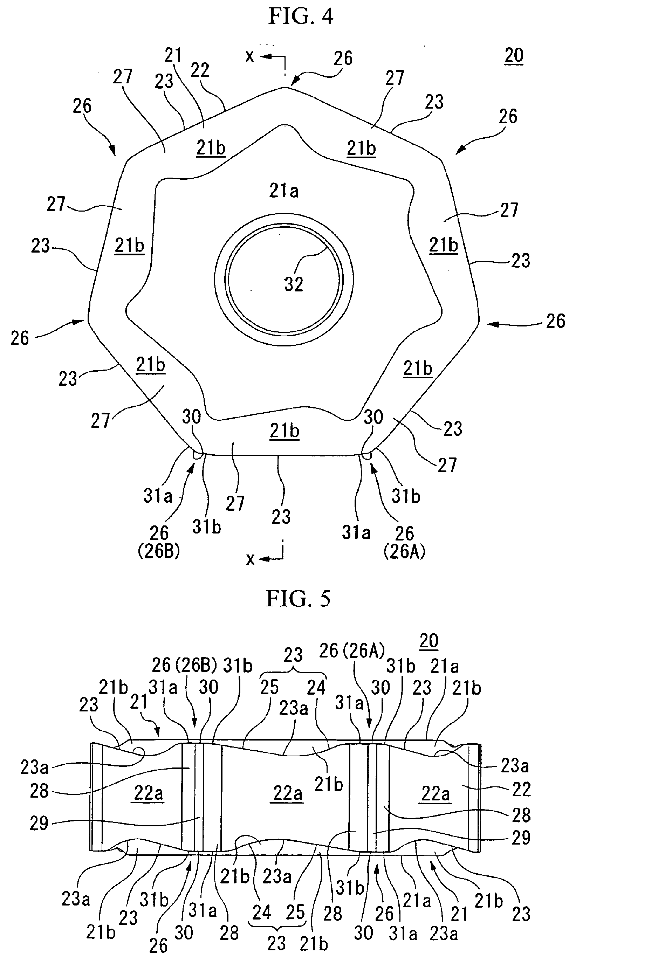

An embodiment of the present invention is described with reference to the appended drawings. FIG. 1 to FIG. 3 show a milling cutter, which is a cutting tool of the present embodiment. Furthermore, FIG. 4 to FIG. 7 show a cutting insert to be mounted on the milling cutter. The milling cutter of the present embodiment is so-called right handed, which rotates right-handedly (direction T in FIG. 1) when viewed facing the finished surface, and a right handed cutting insert is mounted thereon.
The milling cutter 10 is used when surface machining is performed on a workpiece such as cast iron, steel or the like, and has a tool body of a substantially disk shape with an axis O in the center as shown in FIG 2 and FIG. 3. A mounting hole 12 is formed in the tool body 11 extending along the axis O.
Mounting seats 13 on which cutting inserts 20 described later are mounted, are formed in the outer periphery at the tip of the tool body 11, such that they open at the tip (forward in the cutting direction, bottom of FIG. 1) of the tool body 11, and toward the radial-outside of the tool body 11. In the present embodiment, ten mounting seats 13 are placed around the circumference as shown in FIG. 3.
As shown in FIG 2 and FIG 3, wall faces 13A of the mounting seats 13 which face forward in the tool rotation direction T, are inclined such that they recede gradually backward in the tool rotation direction T as they approach the radial-outside of the tool body 11, and recede backward slightly in the tool rotation direction T relative to the axis O as they proceed forward in the cutting direction.
As shown in FIG 1, a wall face 13B of the mounting seat 13, which faces forward in the cutting direction, has an inclined face 14 which protrudes forward in the cutting direction as it approaches the radial-outside of the tool body 11, and an inclined face 15 which protrudes forward in the cutting direction as it approaches the radial-inside of the tool body 11, and is a concave V-shape toward the rear (backward in the cutting direction, upward in FIG 1) of the tool body 11. On the wall face 13B, the inclined face 14 which protrudes forward in the cutting direction as it approaches the radial-outside of the tool body 11, is a first contact face 14 with which a flank 22a of the cutting insert 20 makes contact. Moreover, on the wall face 13B, the inclined face 15 which protrudes forward in the cutting direction as it approaches the radial-inside of the tool body 11, is a flank 15 that recedes such that it does not make contact with the cutting insert 20.

A wall face 13C of the mounting seat 13 which faces toward the radial-outside of the tool body 11, is provided with a second contact face 16 which is continuous with the flank 15, and makes contact with the flank 22a of the cutting insert 20.

The angle formed by the first contact face 14 and the flank 15 is approximately 128.57°, which is the same as the interior angle of a regular heptagon, and the angle formed by the flank 15 and the second contact face 16 is similarly approximately 128.57°. The angle $\gamma$ formed by the first contact face 14 and the axis O is set to $58.86° \leq \gamma \leq 62.86°$ ($\gamma = 60.86°$ in the present embodiment).

As shown in FIG 2 and FIG 3, a concave part 17 in which a wedge piece 18 is inserted in order to fasten the cutting insert 20, is formed ahead of the mounting seat 13 in the tool rotation direction T such that it opens toward the radial-outside of the tool body 11 and forward in the cutting direction. The face facing backward of the wedge piece 18 in the tool rotation direction T is a pressure face 18A that applies pressure to the cutting insert 20. In the wedge piece 18 installed in the tool body 11, the face that faces forward in the cutting direction and toward the radial-outside of the tool body 11 is indented relative to the cutting insert 20 and the tool body 11, and constitutes a tip pocket 19 together with the cutting insert 20 and the tool body 11.

The cutting insert 20 mounted on the mounting seat 13 constructed in this manner is formed from a hard material such as cemented carbide, and as shown in FIG. 4 and FIG 5 is a so-called negative type cutting insert, having a substantially regular heptagonal shape, wherein there are provided two heptagonal faces 21 having seven corners 26, and side faces 22 located such that they cross the two heptagonal faces 21 at right angles. The cutting insert 20 is formed such that it is rotationally symmetrical through approximately 51.43° and front/back-reversal symmetrical around the circumference when viewed from the direction facing the heptagonal faces 21.

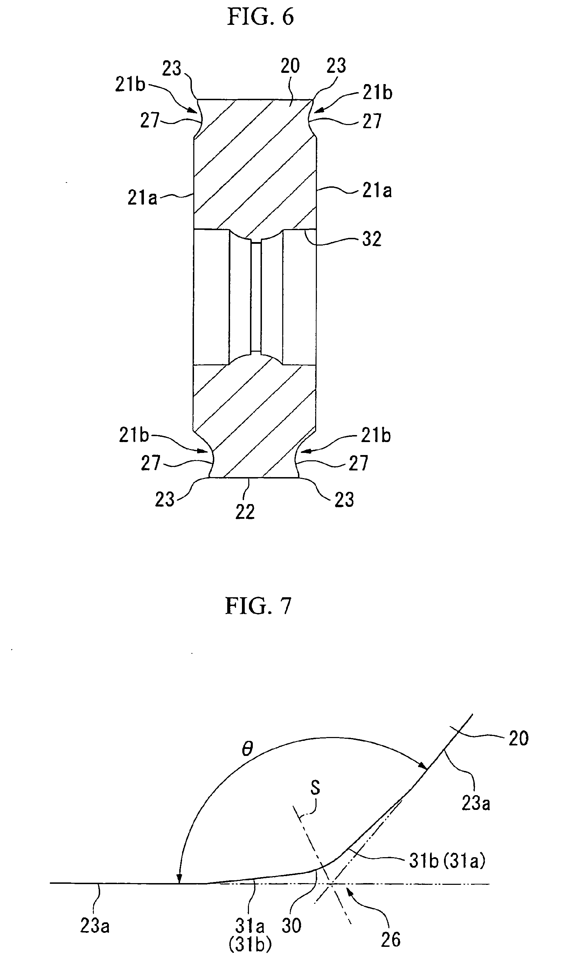

There are planar clamping faces 21a parallel with each other in the center of the heptagonal faces 21. Furthermore, a through hole 32 which passes through the cutting insert 20 in the thickness direction, is formed in the center of the heptagonal faces 21 as shown in FIG 4 and FIG. 6.

Cutting edges 23 are formed at the ridge line of the heptagonal faces 21 and the side face 22, that is, on each side of the heptagonal faces 21. In the present embodiment, since seven cutting edges 23 are formed on one heptagonal face 21, the cutting insert 20 has fourteen cutting edges 23 in total.

The heptagonal faces 21 have planar clamping faces 21a parallel with each other, which are provided at right angles to the side faces 22, and concave cutting faces 21b, which are continuous with the cutting edges 23, and are indented from the clamping faces 21a. The cutting faces 21b are provided with grooved breakers 27 which are continuous with the cutting edges 23, and are indented in the thickness direction of the cutting insert 20 as shown in FIG. 4 and FIG 6. The breakers 27 that are continuous with adjacent cutting edges 23 are continuous, and the groove width expands greatly from a corner 26A (one of the corners 26) toward a corner 26B (one of the corners 26), which is adjacent in the clockwise direction, in the vicinity of the corner 26A, and becomes smaller in the vicinity of the corner 26B, when viewed from the side facing the heptagonal face 21, as shown in FIG 4.

As shown in FIG. 5, when the cutting insert 20 is viewed from the side face 22, each of the cutting edges 23, between the corner 26A and the corner 26B for example, comprises: a concave curve part 24 which is indented greatly in the thickness direction of the cutting insert 20 in the vicinity of the corner 26A, and is a portion that curves from the corner 26A to a base part; and an inclined part 25 which inclines gradually such that it approaches the heptagonal face 21 where the cutting edge 23 is formed as it approaches the corner 26B from the base part of the concave curve part 24, and is a straight line part from the base part to the corner 26B. The base part of the concave curve part 24, that is, the location where the cutting edge 23 is indented the furthest, is a location that is closer to the corner 26A than to the corner 26B, and the groove width of the breaker 27 is at its maximum close to this location. That is, between the corner 26A and the corner 26B as shown in FIG 4 and FIG. 6, the depth in the axial direction and the groove width in the radial direction of the groove of the breaker 27 are at their greatest in the vicinity of the corner 26A.

The side face 22, as shown in FIG. 4 and FIG. 5, contains: planar flanks 22a which are continuous with the cutting edges 23; planar flat parts 28 which are continuous with the flanks 22a, connect adjacent flanks 22a, and incline from the flanks 22a toward the inside (center) of the heptagonal faces 21; and curved corner R parts 29 which connect between adjacent flat parts 28 at the corners 26. Corner R edges 30 are respectively formed at the ridge lines of the corner R parts 29 and the cutting faces 21b (heptagonal faces 21). Furthermore, main cutting edges 23a are respectively formed at the ridge lines of the flanks 22a and the cutting faces 21b.

Sub-cutting edges 31a and 31b are formed at the ridge line between each of the flat parts 28 and each of the heptagonal faces 21. Viewed from the side facing the cutting edge 21b, a sub-cutting edge 31a is formed at the ridge line between one flat part 28 of a pair of flat parts 28 connected at the corner 26, which extends from the corner 26 in the clockwise direction, and the cutting face 21b; and a sub-cutting edge 31b is formed at the ridge line between another flat part 28, which extends from the corner 26 in the counter clockwise direction, and the cutting edge 21b. That is, the sub-cutting edges 31 a and 31b are each formed such that they extend in opposite directions to each other around the circumference between one and the other heptagonal faces 21, via each of the corner R edges 30. The corner 26 in which the corner R edge 30 and a pair of sub-cutting edges 31 a and 31b are arranged in this manner, when viewed from the side facing the heptagonal face 21, as shown in FIG. 7, is linearly symmetrical relative to the base line S dividing the corner 26 into two similar parts.

Each cutting edge 23 comprises: a main cutting edge 23a formed on the line of intersection between the flank 22a and the cutting face 21b; sub-cutting edges 31a and 31b provided on the two sides of the main cutting edge 23a; and a corner R edge 30. The sub-cutting edge 31 a and the corner R edge 30 are formed parallel with the clamping faces 21 a at a location one step down from the clamping face 21 a.

As shown in FIG. 7, the angle $\theta$ formed by two adjacent main cutting edges 23a viewed from the side facing the heptagonal face 21 is approximately $\theta = 128.57°$, which is the same as the interior angle of a regular heptagon. Furthermore, the angle formed by the flat parts 28 flanking the corner R part 29 is greater than the angle 0 between the main cutting edges 23a, and is set to be larger than or equal to 131.43° and less than or equal to 139.34°, for example.

By mounting cutting inserts 20 constructed in this manner on the mounting seats 13, a milling cutter 10 is constructed.

As shown in FIG 1, the cutting insert 20 is mounted on the mounting seat 13 such that one heptagonal face 21 (clamping face 21a) of the cutting insert 20 opposes the wall face 13A that faces forward in the tool rotation direction T of the mounting seat 13, and the main cutting edge 23a, which is engaged in cutting, is directed forward in the cutting direction, and toward the radial-outside of the tool body 11. In the case where the cutting insert 20 is mounted on the mounting seat 13 in this manner, the main parts that participate in cutting are the main cutting edge (reference symbol A of FIG 1) facing forward in the cutting direction, toward the radial-outside of the tool body 11 and forward in the tool rotation direction T; the corner R edge 30 and the cutting edge 31a that is adjacent to the main cutting edge A, and provided at the end of the cutting edge (reference symbol B of FIG 1) facing forward in the cutting direction; and the cutting face 21b continuous with the main cutting edge A and the flank 22a. The groove width of the breaker 27 formed on the cutting face 21b continuous with the main cutting edge A widens toward the rear in the cutting direction and toward the radial-outside of the tool body 11.

In this case, as shown in FIG 1, a flank 22a (reference symbol C of FIG. 1) next but one from the flank 22a continuous with the main cutting edge A toward the rear in the cutting direction makes contact with the first contact face 14 formed on the wall face 13B facing forward of the mounting seat 13 in the cutting direction; a flank 22a (reference symbol D of FIG 1) continuous with the flank C toward the radial-inside of the tool body 11 is located at the flank 15; and a flank 22a (reference symbol E of FIG 1) continuous with the flank D, and facing toward the radial-inside of the tool body 11 makes contact with a second contact face 16 formed on the wall face 13C of the mounting seat 13 facing toward the radial-outside of the tool body 11.

By inserting the wedge piece 18 into the concave part 17 provided ahead of the mounting seat 13 in the tool rotation direction T in a state in which the cutting insert 20 is mounted on the mounting seat 13, a pressure face 18A of the wedge piece 18 applies pressure to the clamping face 21 a toward the rear in the tool rotation direction T. Therefore, the cutting insert 20 is clamped by the wall face 13A facing forward of the mounting seat 13 in the tool rotation direction T and the pressure face 18A of the wedge piece 18, so that it is fastened in the tool body 11.

Here, as shown in FIG. 1, the angle $\gamma$ formed between the first contact face 14 of the mounting seat 13 and the axis O is set to $58.86° \leq \gamma \leq 62.86°$ ($\gamma = 60.86°$ in the present embodiment). Accordingly, the angle formed between the main cutting edge A that participates in cutting and the axis O, so called corner angle $\alpha$, is set to $40° \leq \alpha \leq 44°$ ($\alpha = 42°$ in the present embodiment).

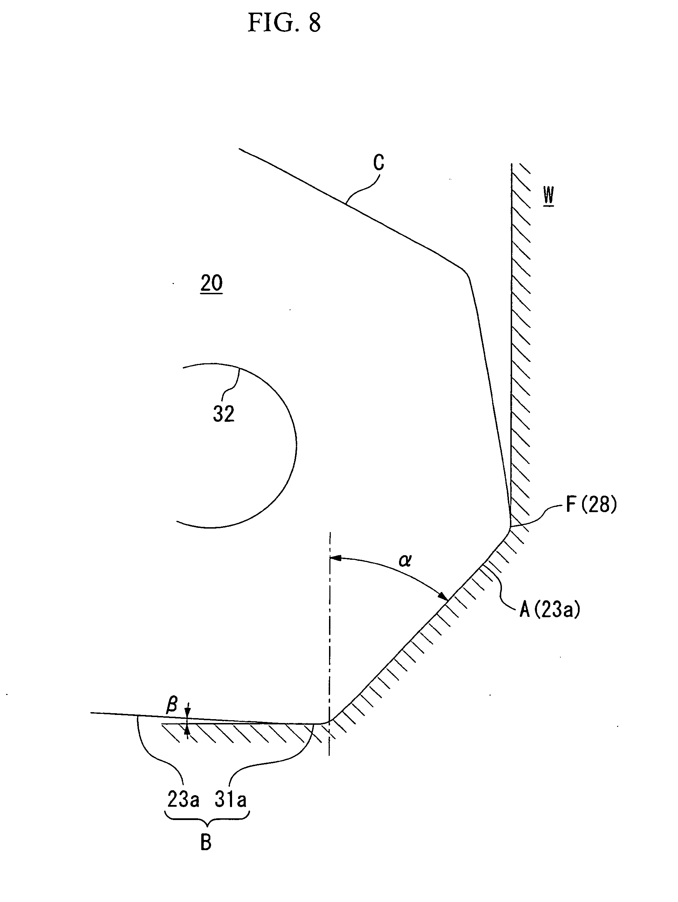

As shown in FIG. 8, the sub-cuttine edge 31 a of the cutting edge B facing forward in the cutting direction is located almost at right angles to the axis O. Relief is provided on the main cutting edge 23a of the cutting edge B so that it recedes backward in the cutting direction as it approaches the radial-inside of the tool body 11. To be specific, the angle $\beta$ formed between the plane at right angles to the axis O and the cutting edge B is set to $1.43° \leq \beta \leq 5.43°$. In the present embodiment, since the corner angle $\alpha = 42°$, the angle $\beta$ is set to $\beta = 3.43°$.

Furthermore, as shown in FIG 1: the radius r of the inscribed circle of the heptagonal face 21 of the cutting insert 20; the maximum radius R1 of the rotation path formed around the axis O by the cutting insert 20 mounted on the mounting seat 13; and the maximum radius R2 of the rotation path formed around the axis O by the tool body 11 are set to satisfy

$$2 \times r \times (0.05) < R1\text{-}R2 < 2 \times r \times (0.15)$$

(in the present embodiment, r = 10mm, R1 = 56.28 mm, and R2 = 54 mm).

The milling cutter 10 constructed in this manner is installed on the spindle nose of a machine tool (not illustrated) via an adaptor or the like inserted in the mounting hole 12 of the tool body 11, and by rotating the tool body 11 about the axis O at high speed, and feeding it in the direction at right angles to the axis O, cutting is performed such that surface machining is applied by the main cutting edge A of the cutting insert 20 directed toward the radial-outside of the tool body 11 and forward in the cutting direction, and the machined surface is finished by the sub-cutting edge 31a of the cutting edge B directed forward in the cutting direction.

According to the milling cutter 10 of the present embodiment, since the corner angle $\alpha$ of the main cutting edge A located toward the front in the cutting direction and in the radial-outer direction is set within a range of $40° \leq \alpha \leq 44°$, the flat part 28 (reference symbol F of FIG. 8), which extends in the counterclockwise direction from the corner 26 facing toward the radial-outside of the tool body 11, moves away from the workpiece such that it recedes toward the radial-inside of the tool body 11 as it retreats backward in the cutting direction. As a result, it is possible to prevent the sub-cutting edge 31a (sub-cutting edge 31a provided on the line of intersection between the flat part F and the flank 22a) formed on the heptagonal face 21 on the reverse of the main cutting edge A, which participates in cutting, from interfering with the workpiece. Therefore, the cutting resistance and abnormal vibration (chatter) during cutting can be reduced, so that it is possible to finish the surface of the workpiece with the required quality.

Moreover, since the first contact face 14 which is formed on the wall face 13B of the mounting seat 13 facing forward in the cutting direction and makes contact with the side face 22 of the cutting insert 20, inclines such that it gradually protrudes forward in the cutting direction as it approaches the radial-outside of the tool body 11, to be specific, since the angle $\gamma$ formed by the first contact face 14 and the axis O is set to $58.86° \leq \gamma \leq 62.86°$ ($\gamma = 60.86°$ in the present embodiment), when the tool body 11 is rotated at high speed about the axis O, it is possible to reliably prevent the cutting insert 20 from moving radially outward due to centrifugal force, and prevent the cutting insert 20 from oscillating. As a result, it is possible to perform cutting with excellent dimensional accuracy, and also to prevent the cutting insert 20 from being damaged.

Furthermore, it is possible to withstand the thrust force of the cutting resistance in the first contact face 14 formed on the wall face 13B facing forward in the cutting direction, and to withstand the feeding force of the cutting resistance in the second contact face 16 formed on the wall face 13C facing toward the radial-outside of the tool body 11. As a result, by withstanding the cutting resistance in the first contact face 14 and the second contact face 16 reliably, it is possible to prevent the cutting insert 20 from shifting, so that it is possible to perform cutting with even better dimensional accuracy.

Moreover, since the breakers 27 which are continuous with the cutting edges 23, and that are indented from the heptagonal faces 21, are formed on the heptagonal faces 21 (cutting faces 21 b) of the cutting insert 20, it is possible to fragment chips produced by the main cutting edges 23a into tiny pieces, and eject them outside reliably, improving the chip processing, so that it is possible to perform excellent cutting.

Furthermore, since it is a negative type cutting insert 20, the radial rake angle and the axial rake angle are set to negative with the heptagonal faces 21 as the reference. However, since the breakers 27 are formed such that they are continuous with the respective cutting edges 23, the orthogonal rake angle of the main cutting edge 23a is set to positive, improving the cutting quality of the main cutting edge 23a, so the cutting resistance can be reduced. Moreover, when the cutting insert 20 is viewed from the side facing the side face 22, since the cutting edge 23 is formed from the indented concave curve part 24 and the inclined part 25, the incline angle of the main cutting edge 23a can be set to positive, improving the ejection of chips, so that it is possible to perform excellent cutting.

Moreover, since the cutting insert 20 is a so-called negative type in which the cutting edge 23 is provided at the ridge line between the two heptagonal faces 21 and the side face 22 at right angles to the two heptagonal faces 21, it is possible to provide a large tool angle, so that it is possible to avoid defects to the cutting edge.

Furthermore, since each of the cutting edges 23 is formed at a ridge line between the two heptagonal faces 21 and the side face 22, seven cutting edges 23 are formed on one heptagonal face 21, and seven cutting edges 23 are also formed on the other heptagonal face 21, so that the cutting insert 20 has fourteen cutting edges 23 in total. As a result, it is possible to use the cutting edge 23 as the main cutting edge 23a in sequence, so that it is possible to reduce the usage cost of the cutting insert 20 significantly.

Moreover, since the main cutting edges 23a which are continuous with the sub-cutting edges 31a located almost at right angles to the axis O and are directed forward in the cutting direction, are located such that they incline backward in the cutting direction at an angle $\beta$ as they approach the radial inside of the tool body 11, they are prevented from interfering with the machined surface of the workpiece, so that it is possible to reduce wear on the main cutting edge 23a before use. As a result, it is possible to rotate to another corner of the cutting insert 20 (change the main cutting edge), in order to use a main cutting edge 23a whose sub-cutting edge 31a only has been used, for cutting.

Furthermore, by constructing the cutting tool such that: the radius r of the inscribed circle of the heptagonal face of the cutting insert; the maximum radius R1 of the rotation path formed around the axis by the cutting insert mounted on the mounting seat; and the maximum radius R2 of the rotation path formed around the axis by the tool body, satisfy

$$2 \times r \times (0.05) < R1 - R2 < 2 \times r \times (0.15),$$

the cutting insert 20 mounted on the mounting seat 13 protrudes toward the radial-outside from the tool body 11. Therefore the workpiece W and the tool body 11 do not interfere, enabling cutting with a great depth of cut.

The milling cutter of the embodiment of the present invention is described as above. However, the present invention is not limited to this, and appropriate changes are possible within the scope of the technical idea of the invention. For example, FIG. 2 and FIG. 3 which show the embodiment of the present invention, show ten mounting seats provided equally spaced in the circumference direction. However, this is not a limitation. The number and location of the mounting seats can be set as desired, and it is preferable to set them appropriately in consideration of the material of the workpiece, the cutting conditions, and the like. For example, by locating the mounting seats unequally spaced, resonance of the tool body can also be prevented.

Moreover, the milling cutter shown in FIG 2 and FIG. 3 is of a so-called wedge type (wedge clamp) in which the cutting inserts are fixed by wedge pieces. However, this is not a limitation, and it may be a so-called screw on type milling cutter in which the cutting inserts are fixed on the mounting seat by clamping screws inserted through the through holes 32 and tightened.

Furthermore, the cutting insert is described as having a through hole 32 formed passing through in the thickness direction. However, the through hole may be provided.

Moreover, the milling cutter is described to be one that cuts cast iron, steel, or the like. However there is no limitation to the workpiece, and it may be one that cuts other materials such as non-ferrous metal, plastic, or the like.

Furthermore, since the milling cutter of the embodiment is used in a clockwise rotation, each of the sub-cutting edges 31 b provided in the cutting insert 20 is part of the main cutting edge 23a, and does not participate in the working of the finished surface. However, in the case where the cutting insert 20 is mounted on a milling cutter that is used in an counterclockwise rotation, each of the sub-cutting edges 31b can participate in the working of the finished surface. That is, since the cutting insert is provided with sub-cutting edges 31 a and 31 b sandwiching the corner 26, it is possible to use it in either of the clockwise and counterclockwise rotation directions.

## Claims

1. A cutting insert (20) that is mountable removably on a cutting tool (10), comprising:

    a front/back-reversal symmetric substantially regular polygonal planar shape having two polygonal faces (21) parallel with each other;
    a side face (22) which is continuous with the polygonal faces (21) at right angles; and
    a cutting edge (23) provided on each ridge line between the polygonal face (21) and the side face (22), wherein the cutting edge (23) includes a main cutting edge (23a) projected onto the side of the regular polygon, and sub-cutting edges (31a, 31b) that extend from opposite ends of the main cutting edge (23a) so as to incline from the main cutting edge (23a) toward the center of the polygonal face when viewed from the side facing the polygonal face, and connect the adjacent main cutting edges (23a), **characterised in that** the cutting insert has a substantially regular heptagonal planar shape, having two heptagonal faces (21) parallel with each other and
    the angle formed by two adjacent sub-cutting edges (31a, 31b) is larger than or equal to 131.43° and less than or equal to 139.34°.

2. The cutting insert (20) according to claim 1, wherein each heptagonal face (21) has:

    a planar clamping face (21a) provided at right angles to the side face (22) and parallel to the planar clamping face of the other heptagonal face;
    a cutting face (21b) indented from the clamping face (21a); and
    a breaker (27) provided on the cutting face (21b), which is continuous with the cutting edge (23) and indented from the cutting face (21b).

3. The cutting insert (20) according to claim 1, wherein the heptagonal faces (21) have:

    respective planar clamping faces (21a) provided at right angles to the side face (22) and parallel with each other, and

respective a planar cutting faces (21b) indented from the clamping face (21a).

4. The cutting insert (20) according to claim 1, wherein, when viewed from a side facing a flank (22a) of the side face (22), which flank is continuous with the cutting edge (23), the cutting edge (23) is provided so as to make an indented concave curve.

5. A cutting tool (10) comprising: a tool body (11) which rotates about an axis (O) thereof; and a cutting insert (20) according to any of Claims 1 to 4 which is mounted removably on the outer periphery at the tip of the tool body (11), wherein:

   the tool body (11) is equipped with a mounting seat (13) that retains the cutting insert (20) such that one of the main cutting edges (23a) is directed toward the tip of the tool body (11) and in a radial-outer direction in order to make it work in cutting, one of the sub-cutting edges (31a, 31b) is located almost at right angles to the axis (O) and a corner angle $\alpha$ between said one of main cutting edges (23a) and the axis satisfies a relation $40° \leq \alpha \leq 44°$.

6. The cutting tool (10) according to claim 5, wherein
   the side face (22) include flanks (22a) which are continuous with each of the cutting edges (23),
   and the mounting seat (13) is provided with:

   a first contact face (14) which makes contact with the flank (22a) which is continuous with the main cutting edge (23a) next but one from the main cutting edge (23a) that works in cutting, at a rear end side of the tool body (11);
   a second contact face (16) which makes contact with the flank (22a) next but one from the flank (22a) which makes contact with the first contact face (14) toward a radial-inside of the tool body (11); and
   a flank (22a) that is provided between the first contact face (14) and the second contact face (16), and with which the cutting insert (20) does not make contact.

7. The cutting tool (10) according to any of claims 5 or 6, wherein:

   a radius (r) of an inscribed circle of the heptagonal face (21) of the cutting insert (20);
   a maximum radius (R1) of a rotation path formed around the axis (O) by the cutting insert (20) mounted on the mounting seat (13); and
   a maximum radius (R2) of a rotation path formed around the axis (O) by the tool body (11) satisfy $2 \times r \times (0.05) < R1 - R2 < 2 \times r \times (0.15)$.

**Patentansprüche**

1. Schneideinsatz (20), der entfernbar an einem Schneidwerkzeug (10) anbringbar ist, mit:

   einer vorne/hinten-umkehrsymmetrischen im Wesentlichen regelmäßigen vieleckigen ebenen Form mit zwei vieleckigen Flächen (21), die parallel zueinander sind;
   einer Seitenfläche (22), die mit den vieleckigen Flächen (21) mit rechten Winkeln zusammenhängend ist; und
   einem Schneidrand (23), der an jeder Firstlinie zwischen der vieleckigen Fläche (21) und der Seitenfläche (22) vorgesehen ist, wobei
   der Schneidrand (23) einen Hauptschneidrand (23a), der auf die Seiten des regelmäßigen Vielecks vorsteht, und Nebenschneidränder (31a, 31b) aufweist, die sich von entgegensetzten Enden des Hauptschneidrands (23a) erstrecken, sodass sie von dem Hauptschneidrand (23a) zu dem Mittelpunkt der vieleckigen Fläche geneigt sind, wenn von der Seite aus betrachtet, die zu der vieleckigen Fläche zeigt, und sie die angrenzenden Hauptschneidränder (23a) verwenden, **dadurch gekennzeichnet, dass** der Schneideinsatz eine im Wesentlichen regelmäßige siebeneckige ebene Form aufweist, die zwei siebeneckige Flächen (21) aufweist, die parallel zueinander sind, und der Winkel, der durch zwei angrenzende Nebenschneidränder (31a, 31b) gebildet wird, größer als oder gleich 131,43° und weniger als oder gleich 139,34° ist.

2. Schneideinsatz (20) nach Anspruch 1, bei dem die siebeneckige Fläche (21) aufweist:

   eine ebene Klemmfläche (21a), die in rechten Winkeln zu der Seitenfläche (22) und parallel zu der ebenen Klemmfläche der anderen siebeneckigen Fläche vorgesehen ist;

eine Schneidfläche (21b), die von der Klemmfläche (21a) eingekerbt ist; und
einen Aufbrecher (27), der an der Schneidfläche (21b) vorgesehen ist, der zusammenhängend mit dem Schneidrand (23) und eingekerbt von der Schneidfläche (21b) ist.

3. Schneideinsatz (20) nach Anspruch 1, bei dem die siebeneckigen Flächen (21) aufweisen:

   entsprechende ebene Klemmflächen (21a), die in rechten Winkeln zu der Seitenfläche (22) und parallel zueinander vorgesehen sind, und
   entsprechende ebene Schneidflächen (21b), die von der Klemmfläche (21a) eingekerbt sind.

4. Schneideinsatz (20) nach Anspruch 1, bei dem, wenn von einer Seite aus betrachtet, die zu einer Flanke (22a) der Seitenfläche (22) zeigt, wobei die Flanke zusammenhängend mit dem Schneidrand (23) ist, der Schneidrand (23) so vorgesehen ist, dass er eine eingekerbte konkave Biegung macht.

5. Schneidwerkzeug (10) mit: einem Werkzeugkörper (11), der um eine Achse (0) davon rotiert; und einem Schneideinsatz (20) nach einem der Ansprüche 1 bis 4, der entfernbar an dem äußeren Umfang an der Spitze des Werkzeugkörpers (11) angebracht ist, wobei:

   der Werkzeugkörper (11) mit einem Anbringsitz (13) ausgestattet ist, der den Schneideinsatz (20) derart hält, dass einer der Hauptschneidränder (23a) zu der Spitze des Werkzeugkörpers (11) zeigt und in einer radial äußeren Richtung, damit er beim Schneiden arbeitet, einer der Nebenschneidränder (31a, 31b) nahezu in rechten Winkeln zu der Achse (O) angeordnet ist und ein Eckwinkel αa zwischen dem einen der Hauptschneidränder (23a) und der Achse eine Beziehung 40° ≤ α ≤ 44° erfüllt.

6. Schneidwerkzeug (10) nach Anspruch 5, bei dem die Seitenfläche (22) Flanken (22a) aufweist, die zusammenhängend mit jedem der Schneidränder (23) sind,
   und der Anbringsitz (13) versehen ist mit:

   einer ersten Kontaktfläche (14), die Kontakt zu der Flanke (22a) herstellt, die zusammenhängend mit dem Hauptschneidrand (23a) ist, welcher der übernächste von dem Hauptschneidrand (23a) ist, der beim Schneiden arbeitet, an einer hinteren Endseite des Werkzeugkörpers (11);
   einer zweiten Kontaktfläche (16), die Kontakt mit der Flanke (22a) herstellt, welche die übernächste von der Flanke (22a) ist, die Kontakt mit der ersten Kontaktfläche (14) zu einem radial Inneren des Werkzeugkörpers (11) herstellt; und
   einer Flanke (22a), die zwischen der ersten Kontaktfläche (14) und der zweiten Kontaktfläche (16) vorgesehen ist und mit welcher der Schneideinsatz (20) keinen Kontakt herstellt.

7. Schneidwerkzeug (10) nach einem der Ansprüche 5 oder 6, bei dem:

   ein Radius (r) eines umschriebenen Kreises der siebeneckigen Fläche (21) des Schneideinsatzes (20);
   ein maximaler Radius (R1) eines Rotationspfads, der um die Achse (O) durch den Schneideinsatz (20) gebildet wird, der an dem Anbringsitz (13) angebracht ist; und
   ein maximaler Radius (R2) eines Rotationspfads, der um die Achse (O) durch den Werkzeugkörper (11) gebildet wird, 2 x r x (0,05) < R1 - R2 < 2 x r x (0,15) erfüllen.

## Revendications

1. Plaquette de coupe (20) qui peut être montée de manière amovible sur un outil de coupe (10), comprenant :

   une forme planaire polygonale essentiellement régulière symétrique à inversion avant/arrière ayant deux faces polygonales (21) parallèles l'une à l'autre ;
   une face latérale (22) qui est continue avec les faces polygonales (21) à angles droits ; et
   un bord de coupe (23) prévu sur chaque ligne de crête entre la face polygonale (21) et la face latérale (22), où le bord de coupe (23) comporte un bord de coupe principal (23a) projeté sur le côté du polygone régulier, et des sous-bords de coupe (31a, 31b) qui s'étendent des extrémités opposées du bord de coupe principal (23a) de manière à s'incliner par rapport au bord de coupe principal (23a) vers le centre de la face polygonale (21) en regardant du côté en vis-à-vis de la face polygonale, et relient les bords de coupe principaux (23a) adjacents, **caractérisée en ce que** la plaquette de coupe a une forme planaire heptagonale essentiellement régulière, ayant deux faces heptagonales (21) parallèles entre elles et l'angle formé par deux sous-bords de coupe (31a, 31b) adjacents est supérieur ou égal à 131,43° et inférieur ou égal à 139,34°.

2. Plaquette de coupe (20) selon la revendication 1, dans laquelle chaque face heptagonale (21) présenté :

une face de serrage planaire (21a) pourvue à angles droits par rapport à la face latérale (22) et parallèle à la face de serrage planaire de l'autre face heptagonale ;
une face de coupe (21b) en retrait par rapport à la face de serrage (21a) ; et
un brise-copeaux (27) prévu sur la face de coupe (21b), qui est continu avec le bord de coupe (23) et en retrait par rapport à la face de coupe (21b).

3. Plaquette de coupe (20) selon la revendication 1, dans laquelle les faces heptagonales (21) présentent :

des faces de serrage planaires (21a) respectives prévues à angles droits par rapport à la face latérale (22) et parallèles les unes aux autres, et
des faces de coupe planaires (21b) respectives en retrait par rapport à la face de serrage (21a).

4. Plaquette de coupe (20) selon la revendication 1, dans laquelle, en regardant d'un côté en vis-à-vis d'une face de dépouille (22a) de la face latérale (22), laquelle face de dépouille est continue avec le bord de coupe (23), le bord de coupe (23) est prévu de façon à avoir une courbe concave dentelée.

5. Outil de coupe (10) comprenant : un corps (11) d'outil qui tourne autour de son axe (O) ; et une plaquette de coupe (20) selon l'une des revendications 1 à 4 qui est montée de manière amovible sur la périphérie externe au niveau de la pointe du corps (11) de l'outil, où :

le corps (11) de l'outil est équipé d'un siège de montage (13) qui retient la plaquette de coupe (20) de sorte que l'un des bords de coupe principaux (23a) soit dirigé vers la pointe du corps (11) de l'outil et dans une direction radiale externe afin de permettre son travail de découpe, l'un des sous-bords de coupe (31a, 31b) est situé quasiment à angles droits par rapport à l'axe (O) et un angle de coin $\alpha$ entre ledit l'un des bords de coupe principaux (23a) et l'axe satisfait la relation $40° \le \alpha \le 44°$.

6. Outil de coupe (10) selon la revendication 5, dans lequel
la face latérale (22) comporte des faces de dépouille (22a) qui sont continues avec chacun des bords de coupe (23), et le siège de montage (13) est pourvu de :

une première face de contact (14) qui entre en contact avec la face de dépouille (22a) qui est continue avec le bord de coupe principal (23a) qui vient immédiatement après celui qui suit le bord de coupe principal (23a) qui effectue un travail de découpage, au niveau d'un côté d'extrémité arrière du corps (11) de l'outil ;
une deuxième face de contact (16) qui entre en contact avec la face de dépouille (22a) qui vient immédiatement après celle qui suit la face de dépouille (22a) qui entre en contact avec la première face de contact (14) vers l'intérieur radial du corps (11) de l'outil ; et
une face de dépouille (22a) qui est prévue entre la première face de contact (14) et la deuxième face de contact (16), et avec laquelle la plaquette de coupe (20) n'entre pas en contact.

7. Outil de coupe (10) selon l'une des revendications 5 ou 6, dans lequel :

un rayon (r) d'un cercle inscrit de la face heptagonale (21) de la plaquette de coupe (20) ;
un rayon maximal (R1) d'un trajet de rotation formé autour de l'axe (O) par la plaquette de coupe (20) montée sur le siège de montage (13) ; et
un rayon maximal (R2) d'un trajet de rotation formé autour de l'axe (O) par le corps (11) de l'outil satisfont la relation $2 \times r \times (0{,}05) < R1-R2 < 2 \times r \times (0{,}15)$.

FIG. 1

FIG. 2

FIG. 3

FIG. 4

FIG. 5

## FIG. 6

## FIG. 7

# FIG. 8

# FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3180604 B

- JP 2002263943 A